## Europäisches Patentamt

## European Patent Office

## Office européen des brevets

(19)

(11) Veröffentlichungsnummer: **0 228 679**
**B1**

(12) **EUROPÄISCHE PATENTSCHRIFT**

(45) Veröffentlichungstag der Patentschrift:
08.11.89

(51) Int. Cl.⁴: **C22B 60/02,** G21C 19/46, C01G 56/00

(21) Anmeldenummer: **86117771.5**

(22) Anmeldetag: **28.06.83**

(60) Veröffentlichungsnummer der früheren Anmeldung nach Art. 76 EPÜ: **0098510**

(54) **Verfahren zur selektiven Trennung des Plutoniums von Uran und anderen Metallen.**

(30) Priorität: **02.07.82 DE 3224803**

(43) Veröffentlichungstag der Anmeldung:
**15.07.87 Patentblatt 87/29**

(45) Bekanntmachung des Hinweises auf die Patenterteilung:
**08.11.89 Patentblatt 89/45**

(84) Benannte Vertragsstaaten:
**BE DE FR GB**

(56) Entgegenhaltungen:
**EP-A- 0 004 953**
**DE-B- 1 166 113**
**US-A- 2 992 888**
**US-A- 3 158 614**
**US-A- 4 464 343**

(73) Patentinhaber: **KERNFORSCHUNGSZENTRUM KARLSRUHE GMBH, Weberstrasse 5 Postfach 3640, D-7500 Karlsruhe 1(DE)**

(72) Erfinder: **Heckmann, Klaus, Prof. Dr., Zum Aichahof 20, D-8400 Regensburg(DE)**
Erfinder: **Spurny, Jiri, Dr., Alfons-Auer-Strasse 16b, D-8400 Regensburg(DE)**

## Beschreibung

Die Erfindung betrifft ein Verfahren zur selektiven Trennung von Plutonium und Uran.

Die gemeinsame Abtrennung von Plutonium und Uran von anderen Elementen und die Abtrennung des Plutoniums vom Uran erfolgt heutzutage fast ausschließlich aus wäßrigen Lösungen. Hier haben sich zwei Verfahren durchgesetzt, deren jedes in mehreren Varianten angewendet wird: das Flüssig-Extraktionsverfahren und das Ionenaustauschverfahren. Beide Verfahren lassen sich zwar grundsätzlich handhaben - auch in großtechnischem Maßstab - weisen aber noch unerwünschte Nachteile auf:
- Relativ lange Verweilzeiten von organischen Lösungsmitteln, Komplexbildnern oder Harzen in Gebieten höherer Strahlungsdichte führen zu radiolytischer Zerstörung und damit zu Kapazitätsverlusten und zu störenden Gasentwicklungen.
- Bei den Flüssig-Extraktionsverfahren bereiten sowohl der Durchtritt von $UO_2^{2+}$ und $Pu^{4+}$ durch die Phasengrenze zwischen Wasser und organischem Solvens, als auch die Anreicherung von Niederschlägen an dieser Phasengrenze kinetische Probleme.
- Bei Anwendung der Mixer/Settler-Technik im Zuge der Flüssigextraktion wird die stationäre Prozeßführung durch Dichteschwankungen in der organischen und der wäßrigen Phase während sukzessiver Extraktions- und Reextraktionsschritte erschwert.
- Die Reaktion von Ionenaustauscherharzen und Komplexbildnern ( z. B. Tributylphosphat) mit konzentrierter $HNO_3$ bedeutet ein unnötiges Gefahrenpotential.
- Die Trennschärfe der Flüssigextraktionsverfahren und der Ionenaustauschverfahren bei der Separierung des Urans vom Plutonium und bei der Separierung beider Elemente von anderen Elementen ist so niedrig, daß die Separierung in mehreren hintereinander geschalteten Stufen erfolgen muß.

Diese Schwierigkeiten treten bereits in relativ gut definierten Lösungen auf, wie sie z. B. beim Auflösen von Kernbrennelementen in konzentrierter $HNO_3$ anfallen. Es kommen zusätzliche Schwierigkeiten in der Prozeßführung hinzu, wenn uneinheitliche Lösungen aufgearbeitet werden müssen, die evtl. noch schlecht definiertes organisches Material schwankender Zusammensetzung enthalten. Für solche Abwässer existieren derzeit keine ganz befriedigenden Aufbereitungsverfahren, so daß auch die Rückgewinnung von Kernbrennmaterial aus solchen Abwässern und der Transport und die Lagerung der verbleibenden Rückstände noch nicht zufriedenstellend gelöst sind.

Es besteht darum ein Bedarf an neuen oder verbesserten Verfahren für die Separierung von Uran und Plutonium, welche die o. g. Nachteile nicht oder in gemilderter Form aufweisen. Der Anmelder hat darum geprüft, ob sich Plutonium aus wäßrigen Lösungen entweder als Kation oder als komplexes Anion durch entweder anionische oder kationische Tenside als schwerlöslicher Niederschlag ausfällen und auf diese Weise selektiv von Uran oder anderen Elementen abtrennen läßt; er hat auch untersucht, ob die Fällung von Plutonium mit Tensiden zu hydrophoben Niederschlägen führt, die sich mit Hilfe der Ionen- bzw. Präzipitatflotation schnell aus den Mutterlaugen entfernen lassen.

In der DE-AS 11 66 113 wird ein Flotationsverfahren für anorganische Ionen beschrieben, bei dem je nach der Ladung des zu flotierenden Ions ein anionischer oder kationischer Sammler zu der ionenhaltigen Lösungen zugegeben wird und bei dem dann das sich bildende, unlösliche Reaktionsprodukt unter Einblasen von Gas aufgeschwämmt und als Schaum ausgetragen wird. Nach diesem Verfahren läßt sich das Uran aus Lösungen von Uranylsulfat abtrennen, wenn auch mit schlechter Ausbeute.

In der DE-PS 28 17 029 wird ein Verfahren zur selektiven Trennung des Urans von seinen Begleitmetallen und zu seiner Gewinnung beschrieben, demzufolge man zu einer wäßrigen Uranlösung Salzsäure in einer solchen Menge zugibt, daß das $UO_2^{2+}$ anionische Chlorokomplexe bildet, ein kationisches Tensid hinzufügt, den dadurch entstehenden Niederschlag in einer Flotationszelle flotiert und das Uran aus dem ausflotierten Präzipitat gewinnt. Dieses Verfahren gestattet zwar die Urangewinnung in größerer Ausbeute und mit höherer Anreicherung als das Verfahren gemäß DE-AS 11 66 113, es operiert aber auf der Basis von Salzsäure und kann darum aus Gründen der Korrosion nicht ohne zusätzliche Schutzmaßnahmen in größerem Stil eingesetzt werden.

In der DE-PS 29 02 516 wird das in DE-PS 28 17 029 beschriebene Verfahren auch auf schwefelsäurehaltige Lösungen ausgedehnt. Dabei werden Ausbeuten und Anreicherungen von Uran erzielt, die denen wesentlich überlegen sind, wie sie in der DE-AS 11 66 113 genannt werden. Die Flotationsdauer ist länger und die Anreicherung ist geringer als nach dem Verfahren gemäß DE-PS 28 17 029; dafür ist jedoch die Korrosionsgefährdung geringer.

Hinweise darauf, wie man Plutonium von Uran mittels Tensidfällung trennen kann, finden sich in den o. g. Literaturstellen nicht.

Der vorliegenden Erfindung liegt somit die Aufgabe zugrunde, ein einfaches Verfahren zur Abtrennung von Plutonium und Uran zur Verfügung zu stellen, das für die Rückgewinnung von Plutonium aus Kernkraftwerkabbränden und anderen radioaktiven Abfällen geeignet ist und die Nachteile der bekannten Verfahren nicht besitzt. Bei dem erfindungsgemäßen Verfahren soll die Expositionszeit des organischen Materials in Gebieten hoher Strahlungsdichte verringert und die Menge des verwendeten organischen Materials so gering wie möglich gehalten werden. Das erfindungsgemäße Verfahren soll ausschließlich in wäßrigem Milieu ablaufen, da dadurch die Probleme der Phasendurchtrittskinetik und der Dichteschwankungen in Zwei-Phasen-Systemen vermieden werden.

Der Anmelder hat in Fortführung der Arbeiten zur flotativen Isolierung und Anreicherung von $UO_2^{2+}$ aus homogenen wäßrigen Lösungen mit Hilfe von kationischen Tensiden, die in der DE-PS 28 17 029 beschrieben sind, die Möglichkeit überprüft, dieses Verfahren zur Isolierung und Anreicherung

von $Pu^{4+}$ zu verwenden. Dabei ging er von dem bekannten Befund aus, daß $Pu^{4+}$ und $U^{4+}$ zur Bildung von Sulfatokomplexen befähigt sind und darum die wesentliche Voraussetzung für die Präzipitatflotation mit kationischen Tensiden erfüllen.

Außerordentlich überraschen war, daß die für die Fällung verwendeten kationischen Tenside, speziell die Alkylpyridiniumsalze, eine sehr hohe Stabilität gegenüber dem Einfluß radioaktiver Strahlung besitzen. So hatten Bestrahlungsdosen bis zu $10^6$ rd keinen nachweisbaren Einfluß auf die Fällungseigenschaften des Cetylpyridinium-Kations. Erst bei $10^8$ rd war ein signifikanter Rückgang des Fällungsvermögens um rund 30 % zu verzeichnen.

Erfindungsgemäß wird somit ein einfacher und hochselektiver Prozeß zur Trennung von $Pu^{4+}$ und von $UO_2^{2+}$ und zur Rückgewinnung beider Ionen aus wäßrigen Lösungen zur Verfügung gestellt. Bei dem erfindungsgemäßen Verfahren ist es weder erforderlich, ein organischer Lösungsmittel noch Ionenaustauscherharze zur verwenden. Man verwendet sehr strahlungsstabile Reagenzien, deren Verweilzeit in der Lösung außerdem vergleichsweise kurz ist.

In schwefelsauren und sulfathaltigen Lösungen bilden sowohl $Pu^{4+}$ als auch $UO_2^{2+}$ mit kationischen Tensiden schwerlösliche Niederschläge. Darum lassen sich in schwefelsauren und/oder sulfathaltigen Lösungen $Pu^{4+}$ und $UO_2^{2+}$ entweder einzeln oder gemeinsam von allen Begleitmetallen quantitativ abtrennen, die in diesen Lösungen keine oder weniger stabile Sulfatokomplexe als $Pu^{4+}$ und $UO_2^{2+}$ bilden bei Zugabe kationischer Tenside nicht ausfallen.

Die Aufgabe wird erfindungsgemäß dadurch gelöst, daß man in einer $Pu^{4+}$ und $UO_2^{2+}$ enthaltenden Lösung die Schwefelsäurekonzentration und den pH-Wert so einstellt, daß beide Elemente anionische Sulfatokomplexe bilden, danach ein kationisches Tensid zur Lösung hinzufügt, den dadurch entstehenden Niederschlag in an sich bekannter Weise von seiner Mutterlauge abtrennt, ihn sodann in Salpetersäure suspendiert, so daß das gefällte Uran wieder in Lösung geht, und schließlich aus dem verbleibenden Niederschlag das Plutonium und aus der uranhaltigen Lösungen das Uran in an sich bekannter Weise isoliert.

Bei der vorliegenden Erfindung liegt die untere Grenze der Salpetersäurekonzentration zwischen 0,1 bis 1,0 n $HNO_3$. Eine obere Grenze konnte bisher nicht festgestellt werden. Es hat sich herausgestellt, daß auch noch Konzentrationen von 10 n $HNO_3$ verwendet werden können.

$UO_2^{2+}$ bildet bei $HNO_3$-Konzentrationen < 10 n einen Komplex $UO_2NO_3^+$. Bei $HNO_3$-Konzentrationen > 10 n gibt es zwar anionische Komplexe (durch Adsorption von Uran an Anionenaustauschern festgestellt), die Zusammensetzung dieser Komplexe ist aber unbekannt.

Als Tensid werden langkettige Alkylpyridiniumsalze, Alkylamine oder deren Salze, Alkyldimethylnaphthylammoniumsalze, alkylierte Arylamine oder deren Salze, alkyliertes Morpholin oder dessen Salze, oxalkyliertes Pyridin oder dessen Salze, alkyliertes Chinolin oder dessen Salze oder Gemische dieser Verbindungen verwendet, wobei es sich bei den langkettigen Alkylresten um gerade oder verzweigte Ketten von 4 bis 24 Kohlenstoffatomen handelt. Besonders vorteilhaft ist es, wenn man als Tensid ein N-Cetylpyridiniumsalz oder ein N-Octadecylpyridiniumsalz verwendet. Das Tensid kann in der 1- bis 10-fachen äquivalenten Menge angewendet werden.

Das Tensid wird optimal in etwas höheren als den stöchiometrischen Konzentration zugegeben (etwa 1,01- bis 1,05-fach). Gibt man wesentlich mehr Tensid hinzu, so bekommt man natürlich mehr Metall in den Niederschlag, es kommt aber zu unnötig intensiver Schaumentwicklung und zur Verlängerung des Flotationsprozesses. Außerdem verschlechtern sich die Flotationseigenschaften des Niederschlags.

Eine vorteilhafte Ausbildung des erfindungsgemäßen Verfahrens ist dadurch gekennzeichnet, daß die Abtrennung der uran- bzw. plutoniumhaltigen Niederschläge durch ein Flotationsverfahren erfolgt, daß dabei mehrere Flotationszellen verwendet werden, die in Reihe und/oder parallel geschaltet sind, daß man zum Aufschäumen ein Inertgas (wie Stickstoff) oder Luft verwendet, daß man den abflotierten niederschlaghaltigen Schaum weitgehend entwässert, den Niederschlag in wenig Wasser suspendiert, die Suspension erwärmt, so daß der Niederschlag in Lösung geht, sodann aus der Lösung das $Pu^{4+}$ bzw. das $UO_2^{2+}$ durch Erhöhung des pH-Wertes als Plutonat bzw. Uranat ausfällt, den Niederschlag abtrennt und das tensidhaltige Filtrat in den Flotationsprozeß rezirkuliert. Die aufzubereitenden Lösungen enthalten neben Uran und Plutonium andere Metallionen, die in diesen Lösungen entweder keine anionischen Komplexe oder aber schwächere anionische Komplexe bilden als $UO_2^{2+}$ und/oder $Pu^{4+}$ und die keine schwerlöslichen Niederschläge mit kationischen Tensiden bilden. Vorteilhafterweise kann das Verfahren kontinuierlich durchgeführt werden.

Will man nicht flotieren, sondern z.B. zentrifugieren oder filtrieren, so kann das Tensid auch in höherer Konzentrationen (1.01 bis 1,50 Äquivalente) verwendet werden.

U und Pu lassen sich von der Mehrzahl der radioaktiven Spaltprodukte abtrennen, die in einem Reaktor entstehen. Die Abtrennung ist leicht, wenn die anderen Metalle keine anionischen Komplexe bilden und/oder keine anionischen Polysäuren bzw. Heteropolysäuren. Die Abtrennung von anionischen Komplexen und/oder Polysäuren gelingt aber in praktisch allen Fällen ebenfalls, wenn man entweder Ligandkonzentration ($SO_4^{2-}$) oder pH etwas variiert oder U bzw. Pu bzw. die übrigen Metalle selektiv oxidiert bzw. reduziert. So gelingt sogar die Abtrennung des Pu von Ce (das als Simulans für Pu dient und auch ein wesentliches Spaltprodukt darstellt) durch selektive Reduktion des $Ce^{4+}$ zu $Ce^{3+}$. $Ce^{3+}$ bildet mit kationischen Tensiden keine Niederschläge.

Das erfindungsgemäße Verfahren ist grundsätzlich zur Abtrennung von U und Pu aus allen Ausgangsmaterialien geeignet, die U und Pu enthalten. So wurden beide Elemente aus unspezifischen medium-active-waste (MAW)-Abwässern (des Kernforschungszentrums Karlsruhe) entfernt:

Aus Laugen, die aus naßverascht en Pu-haltigen Abfällen (Gummihandschuhe, Tiegelzangen, Handtücher, Filterpapier etc.) der Plutoniumoxidherstellung stammen. Hierbei handelt es sich um Schwefelsäurelösungen (1-2 M $H_2SO_4$), welche neben Plutonium (und ggf. Uran) noch $Al^{3+}$, $Ca^{2+}$, $Cr^{3+}$, $Cu^{2+}$, $Fe^{3+}$, $Mg^{2+}$, $Mn^{2+}$, $Ni^{2+}$, $Sn^{4+}$, $TiO^{2+}$, $Zn^{2+}$ enthalten.

Hinsichtlich der anderen Verfahrensbedingungen wird auf die DE-PS 28 17 029 verwiesen.

Das folgende Beispiel erläutert die Erfindung.

Beispiel

Gemeinsame Fällung von $Pu^{4+}$ und $UO_2^{2+}$ als Sulfatokomplexe und Trennung in $HNO_3$.

Es wurden 25 mg $Pu^{4+}$, welches mit Anteilen von Pu $^{6+}$ und $Pu^{3+}$ verunreinigt war, und 635 mg $UO_2^{2+}$ in 75 ml einer 1,3 M $H_2SO_4$ gelöst und mit 1 g festem $NaNO_2$ versetzt. Nach Auflösen des Salzes wurde der pH der Lösung mit Ammoniak-Wasser auf 2,5 eingestellt und die Lösung mit Wasser auf 100 ml aufgefüllt. In dieser Lösung wurden sodann 4 g festes Cetylpyridiniumchlorid gelöst. Nach einigen Minuten entstand ein gelber, feinkristalliner Niederschlag, der nach 30-minütigem Rühren abfiltriert wurde.

Das Filtrat enthielt nur noch 1,13 % des ursprünglich gelösten $Pu^{4+}$ und 0,8 % des ursprünglich gelösten $UO_2^{2+}$. Die Plutoniumausbeute im Niederschlag betrug demnach 98,78 %, die Uranausbeute 99,19 %.

Die Niederschlag wurde dann in 10 ml 1,0 M $HNO_3$ suspendiert.

Dabei löste sich der uranhaltige Anteil des Niederschlages auf, der plutoniumhaltige Anteil blieb in Suspension. Der Niederschlag wurde abzentrifugiert und das Uran aus der Mutterlage durch Neutralisieren mit Ammoniak-Wasser als Ammoniumdiuranat abgetrennt.

**Patentansprüche**

1. Verfahren zur selektiven Trennung von Plutonium und Uran, dadurch gekennzeichnet, daß man in einer $Pu^{4+}$ und $UO_2^{2+}$ enthaltenden Lösung die Schwefelsäurekonzentration und den pH-Wert so einstellt, daß beide Elemente anionische Sulfatokomplexe bilden, danach ein kationisches Tensid zur Lösung hinzufügt, den dadurch entstehenden Niederschlag in an sich bekannter Weise von seiner Mutterlauge abtrennt, ihn sodann in Salpetersäure suspendiert, so daß das gefällte Uran wieder in Lösung geht, und schließlich aus dem verbleibenden Niederschlag das Plutonium und aus der uranhaltigen Lösung das Uran in an sich bekannter Weise isoliert.

2. Verfahren nach Anspruch 1, dadurch gekennzeichnet, daß man als Tensid langkettige Alkylpyridiniumsalze, Alkylamine oder deren Salze, Alkyldimethylnaphthylammoniumsalze, alkylierte Arylamine oder deren Salze, alkyliertes Morpholin oder dessen Salze, oxalkyliertes Pyridin oder dessen Salze, alkyliertes Chinolin oder dessen Salze oder Gemische dieser Verbindungen verwendet, wobei es sich bei den langkettigen Alkylresten um gerade oder verzweigte Ketten von 4 bis 24 Kohlenwasserstoffatomen handelt.

3. Verfahren nach Anspruch 2, dadurch gekennzeichnet, daß man als Tensid ein N-Cetylpyridiniumsalz oder ein N-Octadecylpyridiniumsalz verwendet.

4. Verfahren nach einem der der Ansprüche 1 - 3, dadurch gekennzeichnet, daß man das Tensid in der 1- bis 10-fachen äquivalenten Menge, bevorzugt jedoch in der 1,01-bis 1,10-fachen äquivalenten Menge, bezogen auf Uran bzw. Plutonium, verwendet.

5. Verfahren nach einem der voranstehenden Ansprüche, dadurch gekennzeichnet, daß die Abtrennung der uran- bzw. plutoniumhaltigen Niederschläge durch ein Flotationsverfahren erfolgt, daß dabei mehrere Flotationszellen verwendet werden, die in Reihe und/oder parallel geschaltet sind, daß man zum Aufschäumen ein Inertgas (wie Stickstoff) oder Luft verwendet, daß man den abflotierten niederschlaghaltigen Schaum weitgehend entwässert, den Niederschlag in wenig Wasser suspendiert, die Suspension erwärmt, so daß der Niederschlag in Lösung geht, sodann aus der Lösung das $Pu^{4+}$ bzw. das $UO_2^{2+}$ durch Erhöhung des pH-Wertes als Plutonat bzw. Uranat ausfällt, den Niederschlag abtrennt und das tensidhaltige Filtrat in den Flotationsprozeß rezirkuliert.

6. Verfahren nach einem der vorhergenden Ansprüche, dadurch gekennzeichnet, daß die aufzubereitenden Lösungen neben Uran und Plutonium andere Metallionen enthalten, die in diesen Lösungen entweder keine anionischen Komplexe oder aber schwächere anionische Komplexe bilden als $UO_2^{2+}$ und/oder $Pu^{4+}$ und die keine schwerlöslichen Niederschläge mit kationischen Tensiden bilden.

7. Verfahren nach einem der vorhergehenden Ansprüche, dadurch gekennzeichnet, daß das Verfahren kontinuierlich durchgeführt wird.

**Claims**

1. Process for selectively separating plutonium and uranium, characterised in that the sulphuric acid concentration and the pH value are so set in a solution containing $Pu^{4+}$ and $UO_2^{2+}$ that both elements form anionic sulphato complexes, then a cationic surfacant is added to the solution, the resultant precipitate is separated from its mother liquor in a manner known per se, it is then suspended in nitric acid, so that the precipitated uranium dissolves again, and finally the plutonium is isolated in a manner known per se from the remaining precipitate, and the uranium is isolated in a manner known per se from the uranium-containing solution.

2. Process according to claim 1, characterised in that longchained alkyl pyridinium salts, alkyl amines or their salts, alkyl dimethyl naphtyl ammonium salts, alkylated aryl amines or their salts, alkylated morpholine or its salts, oxalkylated pyridine or its salts, alkylated chinoline or its salts or mixtures of these compounds are used as the surfactant, the longchained alkyl residues being straight or branched chains of 4 to 24 carbon atoms.

3. Process according to claim 2, characterised in that an N-cetyl pyridinium salt or an N-octadecyl pyridinium salt is used as the surfactant.

4. Process according to one of claims 1 – 3, characterised in that the surfactant is used in an amount equivalent to 1 to 10 times, but preferably in an amount equivalent to 1.01 to 1.10 times, relative to uranium or plutonium.

5. Process according to one of the preceding claims, characterised in that the separation of the uranium- or plutonium-oontaining precipitates is effected by a flotation process, in that a plurality of flotation cells are used therein which are connected in series and/or in parallel, in that an inert gas (such as nitrogen) or air is used for frothing purposes, in that the floated-off, precipitate-containing froth is largely dehydrated, the precipitate is suspended in a little water, the suspension is heated so that the precipitate dissolves, then the $Pu^{4+}$ or the $UO_2^{2+}$ precipitates from the solution as plutonate or uranate as a result of the pH value being increased, the precipitate is separated, and the surfactant-containing filtrate is recirculated into the flotation process.

6. Process according to one the preceding claims, characterised in that, in addition to containing uranium and plutonium, the solutions to be processed contain other metal ions which form in these solutions either no anionic complexes or, however, anionic complexes which are weaker than $UO_2^{2+}$ and/or $Pu^{4+}$ and form no difficultly soluble precipitates with cationic surfactants.

7. Process according to one of the preceding claims, characterised in that the process is continuously effected.

**Revendications**

1. Procédé pour la séparation sélective du plutonium et de l'uranium, caractérisé en ce que, dans une solution contenant $Pu^{4+}$ et $UO_2^{2+}$, on ajuste la concentration d'acide sulfurique et le pH de telle manière que les deux éléments forment des sulfatocomplexes anioniques, puis on ajoute un agent tensioactif à la solution, on sépare d'une façon connue en soi le précipité ainsi formé d'avec sa liqueur mère, on le met ensuite en suspension dans de l'acide nitrique, de sorte que l'uranium précipité passe à nouveau en solution, et enfin on isole d'une façon connue en soi l'uranium à partir de la solution contenant de l'uranium, et le plutonium à partir du précipité résiduel.

2. Procédé selon la revendication 1, caractérisé en ce que l'on utilise en tant qu'agent tensioactif des sels d'alkylpyridinium à longues chaînes, des alkylamines ou leurs sels, des sels d'alkyldiméthylnaphtylammonium, des arylamines alkylées ou leurs sels, une morpholine alkylée ou ses sels, une pyridine oxalkylée ou ses sels, une quinoléine alkylée ou ses sels, ou des mélanges de ces composés, dans lequels, en ce qui concerne les radicaux alkyle à longues chaînes, il s'agit de chaînes droites ou ramifiées ayant de 4 à 24 atomes de carbone.

3. Procédé selon la revendication 2, caractérisé en ce que l'on utilise, en tant qu'agent tensio-actif, un sel de N-cétylpyridinium ou un sel de N-octadécylpyridinium.

4. Procédé selon l'une quelconque des revendications 1 à 3, caractérisé en ce que l'on utilise l'agent tensio-actif en une quantité de 1 à 10 équivalents, mais de préférence en une quantité de 1,01 à 1,10 équivalent, par rapport à l'uranium ou au plutonium.

5. Procédé selon l'une quelconque des revendications précédentes, caractérisé en ce que l'on effectue la séparation des précipités contenant de l'uranium ou du plutonium au moyen d'une technique de flottation, en ce que l'on utilise à cette fin plusieurs cellules de flottation qui sont montées en série et/ou en parallèle, en ce que l'on utilise pour le moussage un gaz inerte (tel qu'azote) ou de l'air, en ce que l'on déshydrate dans une large mesure la mousse contenant le précipité flotté, on met le précipité en suspension dans un peu d'eau, on chauffe la suspension de manière que le précipité passe en solution, puis on fait précipiter hors de la solution le $Pu^{4+}$ ou le $UO_2^{2+}$, sous forme de plutonate ou, respectivement, d'uranate, par élévation du pH, on sépare le précipité et on recycle dans le processus de flottation le filtrat contenant de l'agent tensio-actif.

6. Procédé selon l'une quelconque des revendications précédentes, caractérisé en ce que, en plus d'uranium et de plutonium, les solutions à traiter contiennent d'autres ions métalliques, qui, dans ces solutions, ne forment pas de complexes anioniques ou forment des complexes anioniques moins stables que $UO_2^{2+}$ et/ou $Pu^{4+}$ et qui, avec des agents tensio-actifs cationiques, ne forment pas de précipités peu solubles.

7. Procédé selon l'une quelconque des revendications précédentes, caractérisé en ce que le procédé est mis en œuvre en continu.